# EUROPEAN PATENT SPECIFICATION

(11) **EP 2 711 874 B1**
(45) Date of publication and mention of the grant of the patent: **15.04.2015**
(21) Application number: 12185344.4
(22) Date of filing: 21.09.2012
(51) Int. Cl.: G06K 19/077

(54) **A chip module support and a method of incorporating such a chip module support in a data carrier card**
Chipmodulträger und Verfahren zur Integration eines solchen Chipmodulträgers in eine Datenträgerkarte
Support de module de puce et procédé d'incorporation d'un tel support de module de puce dans une carte support de données

(43) Date of publication of application: 26.03.2014
(73) Proprietor: Oberthur Technologies, 92300 Levallois-Perret (FR)
(72) Inventor: Bosquet, Olivier, 92000 Nanterre (FR); Laknin, Mourad, 92000 Nanterre (FR)
(74) Representative: Lefevre-Groboillot, David André

(56) References cited:
- EP-A1- 1 437 684
- EP-A1- 2 461 278
- US-A- 5 519 201

## Description

### Field of the Invention

The current invention relates to a chip module support and a method of incorporating such a chip module support in a data carrier card. In particular but not exclusively the invention relates to the retaining in position of contacts to interact with a chip module for a data carrier in the form of a smart card.

### Background of the Invention

Smart cards are typically laminated cards which have electronic chip modules incorporated in the body of the card to allow for communication with other devices such as payment or banking systems. Data held on the card, typically about the bearer of the card can be transmitted from the card to the third party device.

Newer data carriers in the area of smart card technology are known as dual interface cards because there is an interface that uses electrical contacts that allow for there to be a physical contact with an external device and also there a further interface using a magnetic antenna, for example a winding of a plurality of electrically conductive windings that are embedded in the card, and these provide a contactless interface where a transaction can be carried out using wireless communication, typically NF (near field) communication. Typically the two interfaces are in communication with a chip module that is embedded in the card where a cavity has been milled in the card to receive the chip module. The antenna is generally connected to the electronic chip and is used not only as a means of contactless communication, but also to produce the energy needed for power supply to the chip.

To manufacture a data carrier such as a smart card, the module has to be incorporated very precisely in the card so that it cannot be easily removed. Also during manufacture where the chip module is embedded in the card, there needs to be precise positioning of the chip module with contacts that are embedded in the card so communication can occur. The manufacturing process typically involves two main stages, the first being the integration of contact pads and the antenna structure in a support. The second stage involves lamination of the formed support following which there is machining of the support so that contacts can be exposed (and if applicable wires in the support) so that they can be connected to the chip module. This stage of manufacture involves machining the support to form a cavity and inserting the chip module into the support.

A known procedure for producing electronic interface apparatus is described in WO 2008/129526 where a support body if formed from a plurality of layers that are laminated together. Before lamination one of the layers has two holes formed in it into which contact pads are inserted and then the antennae are connected to a respective one of the contact pads.

The contact pads and antennae are then sandwiched between outer layers followed by laminating. The module is then embedded in the card that is to provide a support for the module. The manufacture of such a support is relatively difficult, especially during the step of machining of the cavity in which the contact pads are partially exposed to enable electrical connection of the antenna with the microcircuit.

EP 2221741 describes a process where copper contact pads are incorporated in a support and these pads are welded to the antenna in a card body. As in WO 2008/129526 during the milling process where a cavity is made in the card support to receive the chip module, there may be shearing forces when during formation of the cavity to receive the chip module due to a machining tool coming into contact with the chip module which may cause unwanted rotation of the contacts. Such movements, even with small amplitudes result in poor or incorrect contacts between the contact pads and the chip module which may lead to false contacts and an open short between the components of the chip and the antenna. EP 2221741 seeks to overcome the problems of rotation by enlarging the chip module to have a "T" shape to counter-act the small amount of movements but this adds to cost and results in a bulkier chip module which is not desirable in smart cards that are becoming smaller and smaller. Further having a larger chip module may increase the risk of the chip module detaching from the support body due to flexion forces during general use.

EP 1 437 684 A1 describes a prior art hybrid smart card having a support and a chip module connected to the support.

The invention present invention seeks to overcome the problems of the prior art by providing a way of embedding chip modules in a support that avoids the risk of rotation during milling and which is a simple and economical procedure.

### Summary of the Invention

The invention relates to a support for a chip module according to claim 1, a method of forming support for a chip module according to claim 10 and a data carrier according to claim 12.

Preferably the support body includes at least two contact pads, each having at least one aperture to receive a thermoplastic material.

It is envisaged that each contact pad has at least two apertures, the at least two apertures being in a linear arrangement.

Preferably the material is material forming the support body and is a thermoplastic material.

It is preferred that the support body is a laminate structure with the thermoplastic material from one layer being able to pass to another layer by way of the at least one aperture passing through the at least one contact pad.

It is preferred that the plug of material in the at least one aperture prevents movement of the contact pad in a rotational direction.

It is envisaged that the at least one aperture is substantially circular when viewed from above. However other shapes apertures may be used, for example oblong, rectangular, square, hexagonal shape.

Preferably the data carrier is a smart card with the at least one contact pad being in contact with an antenna embedded in the support body.

It is preferred that the material is a thermoplastic material which is either material making up the support body or a separate adhesive material.

It is preferred that the material is a thermoplastic material forming the support body or which is an adhesive applied to the support body.

Preferably the data carrier includes an antenna and in particular the data carrier is provided as a SIM card, a bank card, a payment card, an identity card or a passport.

### Brief Description of the Figures

An embodiment of the invention will now be described by way of example only with reference to the accompanying figures in which:
Figure 1 shows: a perspective view of a support and contact plates partially exposed in the support according to the prior art;
Figure 2 shows: a cross sectional view of a chip module and a support according to an embodiment of the invention;
Figure 3 shows: a step in the formation of a cavity to receive a chip module; and
Figure 4 shows: planar view of the support with an antenna and electrical connection with contacts of the antenna microcircuit wherein a predetermined area of machining a cavity is shown to reveal contact pads according to an embodiment of the invention.

### Detailed Description of Embodiments of the Invention

The present invention is particularly useful in the manufacture of data carriers that are to be used in the transfer of data electronically such as credit cards, SIM cards, identity cards and passports. In particular the invention is used with a near-field communication means that is able to communicate in compliance with the ISO 14443 communication protocol. Typically data carriers used are those with outside dimensions that comply with a standardized microcircuit card format, for example the ID-1 format of the ISO 7816 standard.

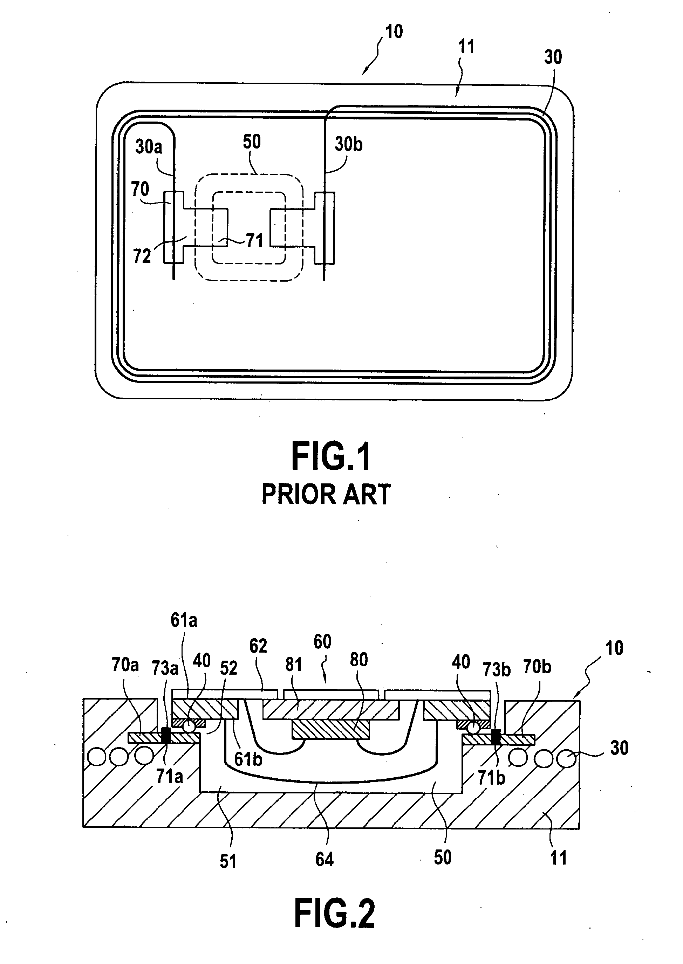

**Figure 1** shows a prior art smart card designated by the general reference numeral 10 (that as yet does not include a chip module). The card 10 is provided by a support body 11 defining the card body 10. The support body is formed in a mass of material, which is typically a plastic material for example a thermoplastic material such as a polycarbonate based material

As shown in the smart card 10 is type dual purpose and includes an antenna 30 incorporated into the support 11. The antenna 30 is formed by a winding of turns of generally rectangular shape extending along the periphery of the support body 11 and includes two ends 30a, 30b.

In order to electrically connect a chip module (not shown) and the antenna 30, the support 11 also includes at least one contact pad 70 for electrically connecting the antenna 30 to a microcircuit on a chip module. Each end 30a and 30b of antenna is arranged to connect respective ends of the antenna 30 to a chip module. In the prior art shown the microcircuit of the chip module is not in direct contact with the contact plates but is electrically connected to the metal plates by way of an electrically insulating adhesive in which are embedded electrically conductive particles to form a contact between the contact plates and the microcircuit.47. The support body 11 also includes a cavity 50 for receiving a chip module.

The contact pad are provided as plates having "T" shape with one part of the contact pad 71 extending at right angles to the other 72. This provides and enlarged contact pad which can be secured by gluing in place with the increased surface area of the contact pad providing an increased area for gluing and therefore the ability to secure the contact pad(s) in position. The contact pad is large and potentially there is still the risk of the contact pad being moved during milling of the card body and also the potential for movement is increased because as the pads have a larger surface area of metal, there is the risk of a greater heat accumulation which could lead to heat transfer in the surrounding plastic body so melting so providing a less secure contact between the contact pad and the card body.

**Figure 2** shows a cross sectional view of a contact pad according to an embodiment of the invention. A support body 11 for a data carrier that is generally shown as 10 is formed by laminating a plurality of superposed layers into which are inserted the different electronic elements of the smart card 10 such that the antenna 30, a chip module generally shown as 60 and the contact pads 70a and 70b. In this embodiment the chip module card 10 includes a microcircuit 80 and a module carrier 81 having two opposite faces that form an external face 61 a and inner face 61b. In addition, the support body 11 includes a cavity 50 for housing the chip module 60. More specifically, the cavity 50 comprises a central zone 51 having more depth than a peripheral zone 52 relative to the central region so defining a stepped arrangement for the cavity 50.

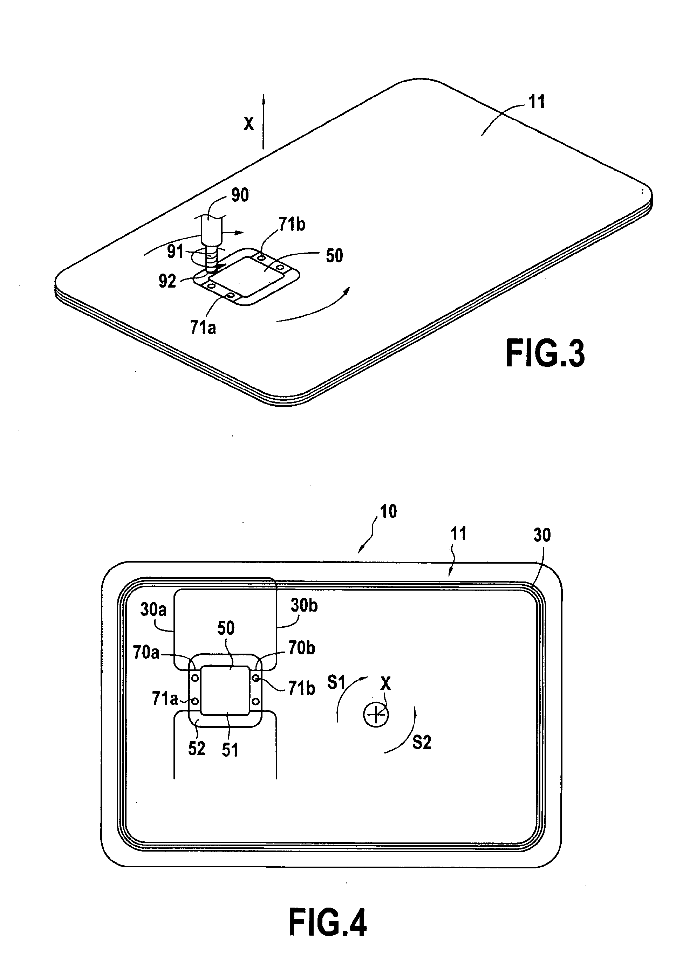

Such a cavity 50 is generally obtained by machining, typically by drilling or countersinking into two operations and this is shown generally in Figure 3.

The outer face 61a includes a metal plate 62 that forms external contacts for establishing a communication between the chip 80 of the chip module 60 and an external card reader (not shown). The inner face 61b carries a metal plate 63 that form the microcircuit internal contacts to the electronic components incorporated in the support body 11. The microcircuit 80 is, for example encapsulated in a polymeric resin cap 64 which projects into the central zone 51 of the cavity 50.

The support body has a contact pad 70 and in this embodiment there are two contact pads 70a and 70b that are located in proximity to the peripheral zone 52 of the cavity 50. The contact pads have apertures 71a and 71b passing through them between the mass forming the support body 11 and the face of the contact pad that is in proximity to the inner face 61b of the metal plate 63 that forms a contact for the chip 80. The contact pads 70a, 70b provide a way of connecting that chip 80 and the wired contacts 30 in the support body 11. In a particular embodiment the antenna 30 is on one layer of a laminated body while the contact pads 70a, 70b are in a different layer for ease of manufacture but it is envisaged that a process may be used where there is one layer with the different components being embedded at different depths in the support body 11. The layers are typically made of an insulating material such as a plastic, epoxy, etc. In addition, the inner layers are sandwiched between outer layers to compensate for any surface defects of the inner layers, so providing a smooth profile for the support body 11. The antenna is incorporated in the support body by a conventional technique (screen printing, engraving, wire insertion, ultrasound, etc.). The apertures allow for material to pass into the apertures or harden to form plugs 73a.73b that provide a physical way of anchoring the contact pads in position.

A stage in the manufacture of a smart card is shown in **Figure 3** where the layers have been laminated together to form the support body 11 and also the antennae and embedded contacts pads 70a and 70b as shown in Figure 2 are encased in the layer. Preferably, the card body has a thickness substantially of the order of 760 microns, according to ISO 7816 that is a protocol applied to microcircuit cards.

The cavity 50 that is to be formed in the support body is then made and for this purpose a milling tool 90 is used that has a milling head 91 with a cutting face 92 for routing out plastic from the support body 11 to form the main cavity and peripheral cavities 51 and 52 as described in Figure 2. During this process there is removal of some of the material on the surface of the contact pads 70a and 70b to reveal a surface that can form a contact surface. During these processing steps, the tool exerts a rotary motion on the contact plate which can lead to movement of the contact plate out of the position where it is required. If there is misalignment of the contact plates production costs are increased because the card has to be discarded and also there is an increased environmental impact as there is wastage of plastic material through having to discard plastic cards. Of even more concern is the fact that cards having misaligned contacts may be issued and the fact there is anything wrong with the card will only be noticed if there is failure in communication due to bad contacts in the card which will have an adverse effect on the user.

The present invention has contact plates with apertures 71a and 71b which typically are holes where the diameter is 0.5 mm. Typically the holes are spaced at approximately 1.5 mm from one another when taking a line from the centre of one hole that is in alignment with another hole. The holes that are shown are round and these have the advantage of being able to even out mechanical stresses. However other shaped apertures may be used such as oblong or other curvilinear shapes or rectilinear shaped apertures may be used such as square, triangular, rectangular or hexagonal apertures. The apertures in the contact pads have the advantage that they allow a viscous material such as melted polymer of adhesive to secure the contact plate directly onto the material that forms the support body 11 as polymer/adhesive can pass though the apertures from one part of the support body such as a laminate layer to another. This results in very secure bonding as the contact pads are in effect embedded in the support body as the bonding is formed by the material forming the support layer rather than there being a separate material that itself has to be bonded in place which could still move if enough shear force is applied which could rupture any bonds. The material in the apertures form a plug or peg that hold the contact pads in position and because the plug/pegs are integral with the surrounding material of the support body rather than being another element that is glued in position, the contact pads are held particularly securely where they are located.

As shown in **Figure 4**, shows a plan view of a data carrier, having an antenna 30 bordering periphery of the support body 11 that provides the data carrier 10. Typically there is a first pair of apertures 71a on one side of a milled area which is of forms a shoulder 52 of the recess 50. The shoulder 52 is of less depth then the central zone 51 of the recess 50. These apertures are aligned and mirror a second pair of apertures 71b located at a position opposite to the first pair. Although two pairs of aligned apertures are shown, variations in the number and arrangement of apertures are possible. The apertures can also have the advantage that they act as a heat sink during the embedding process when plastic material around the contact pads 70a and 70b is heated. The contact pads are in contact with respective ends 30a and 30b of the antenna 30. The apertures can receive melted material which will harden and hence secure the contact plates in place and in effect they act as securing elements (or pegs) 73a, 73b for the contact plates. The milling head as shown in Figure 3 uses a circular motion and so the securing/elements (or pegs) formed in the apertures 71a, 71b prevent rotation in the S1 and S2 directions about and axis X and indeed in any lateral directions.

Once the contact plates are embedded and the milling process occurs which itself can generate heat, the apertures that are in the metal contact allow for dissipation of heat so protecting the contact pad and the surrounding plastic from melting because of heat generated during friction due to the milling process. A further advantage of having apertures in the contact pads is that they can have an aesthetic impact on the card because if the card is held to the light, the apertures let light though and if the apertures are in a patterned arrangement this can add to the attractiveness of the card to the user.

The present invention therefore provides a way of securing a contact pads in position cost effectively and also which is a particularly secure way of holding the contact pad in position as it uses a thermal bonding process which forms an integral bond between the contact pad and the support body.

## Claims

1. A support for a chip module (60) that is to be incorporated in said support to form a data carrier (10), said support being provided as a support body (11) including at least one contact pad (70a,70b), the at least one contact pad (70a,70b) being embedded in the support body (11) with a portion of said at least one contact pad being exposable so said at least one contact pad can form a contact with the chip module (60), **characterized in that** the at least one contact pad (70a,70b) has at least one aperture (71a,71b) into which a material can flow and harden to form a plug (73a, 73b) that substantially prevents movement of the at least one contact pad (70a,70b) relative to the support body (11).

2. A support for a chip module (60) according to claim 1, wherein the support body (11) includes at least two contact pads (70a, 70b), each having at least one aperture (71a, 71b) to receive the material.

3. A support for a chip module (60) according to claim 1 or claim 2, wherein each contact pad (70a, 70b) has at least two apertures, the at least two apertures being in a linear arrangement.

4. A support for a chip module (60) according to any preceding claim wherein the material forming the support body (11) is a thermoplastic material which can flow into the at least one aperture (71a, 71b).

5. A support for a chip module (60) according to any preceding claim wherein the support body (11) is a laminate structure with the material from one layer being able to pass to another layer of the laminate structure by way of the at least one aperture (71a,71b) passing through the at least one contact pad (70a, 70b).

6. A support for a chip module (60) according to any preceding claim comprising a plug of thermoplastic material in the at least one aperture (71a, 71b), whereby the plug prevents movement of the at least one contact pad (70a, 70b) in a rotational direction.

7. A support for a chip module (60) according to any preceding claim wherein the at least one aperture (71a, 71b) is substantially circular when viewed from above.

8. A support for a chip module (60) according to any preceding claim wherein the at least one contact pad (70a, 70b) is located in a peripheral layer (52) of a recess (50) in the support body (11) which is of less depth than a central area (51) of the recess (50).

9. A support for a chip module (60) according to any preceding claim wherein the data carrier (10) is a smart card with the at least one contact pad (70a, 70b) being in contact with an antenna (30) embedded in the support body (11).

10. A method of forming support for a chip module (60) that is to be incorporated in said support to form a data carrier (10), wherein at least one contact pad (70a, 70b) is embedded in a support body (11) and a portion of said at least one contact pad is exposed to form a contact face for the chip module, **characterized in that** the at least one contact pad (70a, 70b) has at least one aperture (71a, 71b) and the area around the at least one contact pad is heated to melt a material forming part of, or associated with the support body (11) so that a portion of said material can flow into the at least one aperture (71a, 71b) following which said material is allowed to harden to form a plug (73a, 73b) that substantially prevents movement of the at least one contact pad (70a, 70b) relative to said support body (11).

11. A method according to claim 10, wherein the material is a thermoplastic material that is either material making up the support body (11) or a separate adhesive material.

12. A data carrier (10) provided as a microcircuit card comprising a chip module (60) and a support body (11) including a cavity (50) for receiving and carrying the chip module (60), **characterized in that** the support body (11) includes at least one contact pad (70a, 70b) having at least one aperture (71a, 71b) into which material has hardened and formed a bond between the at least on contact pad (70a, 70b) and the support body (11) to prevent movement between the two, with the chip module (60) having been contacted with the at least one contact pad (70a, 70b).

13. A data carrier according to claim 12 wherein the material is a thermoplastic material that forms the support body (11).

14. A data carrier (10) according to claim 12 or claim 13 including an antenna (30).

15. A data carrier (10) according to any of claims 12 to 14, provided as a SIM card, a bank card, a payment card, an identity card or a passport.

## Patentansprüche

1. Träger für ein Chipmodul (60), das in den Träger integriert werden soll, um einen Datenträger (10) zu bilden, wobei der Träger als Stützkörper (11) vorgesehen ist, der mindestens ein Kontaktpad (70a, 70b) umfasst, wobei das mindestens eine Kontaktpad (70a, 70b) in den Stützkörper (11) eingebettet ist, wobei ein Teil des mindestens einen Kontaktpads freigelegt werden kann, so dass das mindestens eine Kontaktpad einen Kontakt mit dem Chipmodul (60) bilden kann, **dadurch gekennzeichnet, dass** das mindestens eine Kontaktpad (70a, 70b) mindestens eine Öffnung (71 a, 71 b) hat, in die ein Material fließen und erhärten kann, um einen Stopfen (73a, 73b) zu bilden, der im Wesentlichen die Bewegung des mindestens einen Kontaktpads (70a, 70b) gegenüber dem Stützkörper (11) verhindert.

2. Träger für ein Chipmodul (60) nach Anspruch 1, wobei der Stützkörper (11) mindestens zwei Kontaktpads (70a, 70b) umfasst, wobei jedes mindestens eine Öffnung (71 a, 71 b) zum Aufnehmen des Materials hat.

3. Träger für ein Chipmodul (60) nach Anspruch 1 oder 2, wobei jedes Kontaktpad (70a, 70b) mindestens zwei Öffnungen hat, wobei die mindestens zwei Öffnungen sich in einer linearen Anordnung befinden.

4. Träger für ein Chipmodul (60) nach einem der vorherigen Ansprüche, wobei das Material, das den Stützkörper (11) bildet, ein thermoplastisches Material ist, welches in die mindestens eine Öffnung (71 a, 71 b) fließt.

5. Träger für ein Chipmodul (60) nach einem der vorherigen Ansprüche, wobei der Stützkörper (11) eine Laminatstruktur ist, wobei das Material aus einer Schicht zu einer anderen Schicht der Laminatstruktur durch die mindestens eine Öffnung (71 a, 71 b) übergehen kann, die durch das mindestens eine Kontaktpad (70a, 70b) verläuft.

6. Träger für ein Chipmodul (60) nach einem der vorherigen Ansprüche, die einen Stopfen aus thermoplastischem Material in der mindestens einen Öffnung (71 a, 71 b) umfasst, wodurch der Stopfen eine Bewegung des mindestens einen Kontaktpads (70a, 70b) in einer Rotationsrichtung verhindert.

7. Träger für ein Chipmodul (60) nach einem der vorherigen Ansprüche, wobei die mindestens eine Öffnung (71 a, 71 b) bei Betrachtung von oben im Wesentlichen kreisförmig ist.

8. Träger für ein Chipmodul (60) nach einem der vorherigen Ansprüche, wobei das mindestens eine Kontaktpad (70a, 70b) sich in einer Randschicht (52) einer Vertiefung (50) im Stützkörper (11) befindet, der von geringerer Tiefe als ein zentraler Bereich (51) der Vertiefung (50) ist.

9. Träger für ein Chipmodul (60) nach einem der vorherigen Ansprüche, wobei der Datenträger (10) eine SmartCard mit dem mindestens einen Kontaktpad (70a, 70b) mit einer Antenne (30) ist, die in den Stützkörper (11) eingebettet ist.

10. Verfahren zum Bilden eines Trägers für ein Chipmodul (60), das in den Träger integriert werden soll, um einen Datenträger (10) zu bilden, wobei mindestens ein Kontaktpad (70a, 70b) in einen Stützkörper (11) eingebettet ist und ein Teil des mindestens einen Kontaktpads freigelegt ist, um eine Kontaktfläche für das Chipmodul zu bilden, **dadurch gekennzeichnet, dass** das mindestens eine Kontaktpad (70a, 70b) mindestens eine Öffnung (71 a, 71 b) hat und der Bereich um das mindestens eine Kontaktpad erwärmt wird, um ein Material zu schmelzen, das einen Teil des Stützkörpers (11) bildet und mit demselben verbunden ist, so dass ein Teil des Materials in die mindestens eine Öffnung (71 a, 71 b) fließen kann, und nachfolgend dieses Material härten kann, um einen Stopfen (73a, 73b) zu bilden, der Bewegung des mindestens einen Kontaktpads (70a, 70b) gegenüber dem Stützkörper (11) im Wesentlichen verhindert.

11. Verfahren nach Anspruch 10, wobei das Material ein thermoplastisches Material ist, das entweder den Stützkörper (11) ausmacht oder ein getrenntes Klebematerial ist.

12. Datenträger (10), vorgesehen als Mikroschaltungskarte, die ein Chipmodul (60) und einen Stützkörper (11) umfasst, einschließlich eines Hohlraums (50) zum Aufnehmen und Tragen des Chipmoduls (60), **dadurch gekennzeichnet, dass** der Stützkörper (11) mindestens ein Kontaktpad (70a, 70b) umfasst, das mindestens eine Öffnung (71 a, 71 b) hat, in der Material gehärtet ist und eine Bindung zwischen dem mindestens einen Kontaktpad (70a, 70b) und dem Stützkörper (11) gebildet hat, um Bewegung zwischen den beiden zu verhindern, wobei das Chipmodul (60) in Kontakt mit dem mindestens einen Kontaktpad (70a, 70b) gebracht wurde.

13. Datenträger nach Anspruch 12, wobei das Material ein thermoplastisches Material ist, welches den Stützkörper (11) bildet.

14. Datenträger (10) nach Anspruch 12 oder 13, der eine Antenne (30) umfasst.

15. Datenträger (10) nach einem der Ansprüche 12 bis 14, bereitgestellt als SIM-Karte, Bankkarte, Zahlungskarte, Identitätskarte oder Pass.

## Revendications

1. Support pour un module de puce électronique (60) qui est à incorporer dans ledit support pour former un support de données (10), ledit support étant réalisé sous forme d'un corps de support (11) incluant au moins une plaquette de contact (70a, 70b), l'au moins une plaquette de contact (70a, 70b) étant incorporée dans le corps de support (11) avec une partie de ladite au moins une plaquette de contact qui est accessible de sorte que ladite au moins une plaquette de contact puisse former un contact avec le module de puce électronique (60), **caractérisé en ce que** l'au moins une plaquette de contact (70a, 70b) possède au moins une ouverture (71a, 71b) dans laquelle une matière peut fluer et durcir pour former une cheville (73a, 73b) qui empêche substantiellement tout déplacement de l'au moins une plaquette de contact (70a, 70b) par rapport au corps de support (11).

2. Support pour un module de puce électronique (60) selon la revendication 1, dans lequel le corps de support (11) inclut au moins deux plaquettes de contact (70a, 70b), chacune ayant au moins une ouverture (71a, 71b) pour recevoir la matière.

3. Support pour un module de puce électronique (60) selon la revendication 1 ou la revendication 2, dans lequel chaque plaquette de contact (70a, 70b) possède au moins deux ouvertures, les au moins deux ouvertures étant dans un agencement rectiligne.

4. Support pour un module de puce électronique (60) selon l'une quelconque des revendications précédentes, dans lequel la matière formant le corps de support (11) est une matière thermoplastique qui peut fluer dans l'au moins une ouverture (71a, 71b).

5. Support pour un module de puce électronique (60) selon l'une quelconque des revendications précédentes, dans lequel le corps de support (11) est une structure stratifiée avec la matière d'une première couche qui est capable de passer jusqu'à une autre couche de la structure stratifiée par l'au moins une ouverture (71a, 71b) en passant à travers l'au moins une plaquette de contact (70a, 70b).

6. Support pour un module de puce électronique (60) selon l'une quelconque des revendications précédentes, comprenant une cheville de matière thermoplastique dans l'au moins une ouverture (71a, 71b) la cheville empêchant ainsi tout déplacement en rotation de l'au moins une plaquette de contact (70a, 70b).

7. Support pour un module de puce électronique (60) selon l'une quelconque des revendications précédentes, dans lequel l'au moins une ouverture (71a, 71b) est substantiellement circulaire vue de dessus.

8. Support pour un module de puce électronique (60) selon l'une quelconque des revendications précédentes, dans lequel l'au moins une plaquette de contact (70a, 70b) est située dans une couche périphérique (52) d'un évidement (50) du corps de support (11) qui est d'une moindre profondeur que la zone centrale (51) de l'évidement (50).

9. Support pour un module de puce électronique (60) selon l'une quelconque des revendications précédentes, dans lequel le support de données (10) est une carte à puce avec l'au moins une plaquette de contact (70a, 70b) qui est en contact avec une antenne (30) incorporée dans le corps de support (11).

10. Procédé de formation d'un support pour un module de puce électronique (60) qui est à incorporer dans ledit support pour former un support de données (10), dans lequel au moins une plaquette de contact (70a, 70b) est incorporée dans un corps de support (11) et une partie de ladite au moins une plaquette de contact est accessible pour former une face de contact pour le module de puce électronique, **caractérisé en ce que** l'au moins une plaquette de contact (70a, 70b) possède au moins une ouverture (71a, 71b) et **en ce que** la zone autour de l'au moins une plaquette de contact est chauffée pour fondre une matière faisant partie du, ou associée avec le, corps de support (11) de sorte qu'une partie de ladite matière peut fluer dans l'au moins une ouverture (71a, 71b) à la suite de quoi ladite matière peut durcir pour former une cheville (73a, 73b) qui empêche substantiellement tout déplacement de l'au moins une plaquette de contact (70a, 70b) par rapport audit corps de support (11).

11. Procédé selon la revendication 10, dans lequel la matière est une matière thermoplastique qui est soit une matière constituant le corps de support (11) soit une matière adhésive distincte.

12. Support de données (10) réalisé sous forme d'une carte à microcircuit comprenant un module de puce électronique (60) et un corps de support (11) incluant une cavité (50) destinée à recevoir et à porter le module de puce électronique (60), **caractérisé en ce que** le corps de support (11) inclut au moins une plaquette de contact (70a, 70b) ayant au moins une ouverture (71a, 71b) dans laquelle une matière a durci et formé une liaison entre l'au moins une plaquette de contact (70a, 70b) et le corps de support (11) pour empêcher tout déplacement entre les deux, le module de puce électronique (60) ayant été mis en contact avec l'au moins une plaquette de contact (70a, 70b).

13. Support de données selon la revendication 12, dans lequel la matière est une matière thermoplastique qui forme le corps de support (11).

14. Support de données (10) selon la revendication 12 ou la revendication 13, incluant une antenne (30).

15. Support de données (10) selon l'une quelconque des revendications 12 à 14, réalisé sous forme d'une carte SIM, d'une carte bancaire, d'une carte de paiement, d'une carte d'identité ou d'un passeport.
